# EUROPEAN PATENT APPLICATION

(11) **EP 2 112 627 A1**
(43) Date of publication of application: **28.10.2009**
(21) Application number: 09158499.5
(22) Date of filing: 22.04.2009
(51) Int. Cl.: G06Q 30/00

(54) **Reputation evaluation using a contact information database**

(30) Priority: 22.04.2008 US 107695
(71) Applicant: Plaxo, Inc., Mountain View, CA 94043 (US)
(72) Inventor: Lester, Peter, Philadelphia PA 19103 (US); Golub, Ben, Philadelphia PA 19103 (US); Smarr, Joseph, Philadelphia PA 19103 (US)
(74) Representative: Wallin, Nicholas James

(57) **Abstract**

A contact information database, including records such as those stored in a personal address book, is applied to evaluate the reputation of a user and for conducting fraud or spam detection. A number of different factors selected for reputation/fraud prediction value can be used in a statistical model to evaluate reputation of an individual based on an identifier, such as an email address. The factors can include information useful in predicting the reputation of an individual, such as in how many address books the email address or other information appears, whether emails have been previously sent to that email address, whether any such emails have been returned as undeliverable, and so forth. These factors can be used to create a vector including scores for the user on the various factors, which can be stored in a vector database and updated regularly as the information changes. The information in the vector database can be accessed by parties for use in reputation evaluation, fraud detection, etc. for a particular email address or individual.

## Description

### TECHNICAL FIELD

This disclosure pertains in general to reputation evaluation or fraud detection, and more specifically to using a contact information database to evaluate the reputation of, or detect fraud associated with a user

### DESCRIPTION OF THE RELATEDA RT

Large numbers of financial and other types of transactions are conducted on the Internet regularly. Purchases and sales of goods are commonly made via the Internet. Money is transferred, information exchanged, and other standard transactions are conducted each day. In addition, individuals are more regularly conducting "social transactions" by joining various personal and social networks through which the individual can contact and interact with other members or persons associated with the network. Thus, individuals today have multiple ways to interact with one another via the Internet.

Unfortunately, a significant portion of these transactions conducted or attempted are fraudulent transactions. Similarly, social networks can be used by individuals for making unsolicited and sometimes undesired contact with others. It is difficult to gauge the reputation of a given individual conducting a transaction or to determine, while a transaction is being placed, whether or not that transaction is likely to involve fraud. To manage this problem of potentially fraudulent transactions or otherwise nefarious actions over the Internet, an entity controlling the transaction can either (1) allow the transaction to occur even though it may be fraudulent, or (2) block all transactions suspected to be fraudulent, risking also blocking numerous valid transactions and causing inconvenience to users. Neither of these solutions is a satisfactory one.

If the entity decides to attempt to block transactions suspected to be problematic, the entity must still have a mechanism for determining which transactions pose a problem and which do not. Traditional approaches in detecting fraud or other inappropriate conduct have taken into consideration factors like the history of the user in conducting other transactions with the entity, and some very minimal information about the user himself, such as the IP address from which the transaction originated, the domain of the email address for the user, etc. However, this information provides only a very rudimentary ability to determine the likelihood that a transaction is fraudulent or otherwise likely to be a problem. This information provides almost no information about the user himself that would be useful in determining the reputation of that user or whether that user is likely to commit fraud. Further, if the user has not previously conducted a transaction with the entity/individual, then the history of that user in conducting transactions is not available for consideration, leaving very little information for assessing the likelihood of a fraudulent transaction. Methods focusing on the characteristics of the transaction itself (such as the size of the transaction, the frequency of transaction, etc.) are also problematic, in that persons attempting fraud can quickly learn the characteristics used in fraud prevention programs and can take steps to overcome these prevention programs.

Hence, the current state of the art lacks, inter alia, a system and method for reliably and effectively evaluating the reputation of a user conducting a transaction and/or detecting fraudulent transaction using more detailed information, including specific information about the particular user conducting the transaction.

### SUMMARY OF THE INVENTION

A reputation evaluation system uses a contact information database, including records such as those stored in a personal address book. The information stored in the many records of the contact information database is applied to evaluate the reputation of a user and/or conduct fraud or spam detection. A number of different factors selected for reputation/fraud prediction value can be used in a statistical model to evaluate reputation of an individual based on an identifier, such as an email address. The factors can include information useful in predicting the reputation of an individual, such as in how many address books the email address or other information appears, the "connectedness" of the address books in which the email address appears to other address books, whether emails have been previously sent to that email address, whether any such emails have been returned as undeliverable, and so forth. These factors are used to create a vector, including scores for the user on the various factors, which can be stored in a vector database and updated regularly as the information changes. Advantageously, since the information used for evaluating an individual is derived from information including the activity and history of a multitude of other individuals, it is more difficult for an individual to influence or subvert the reputation engine.

In one embodiment, the information in the vector database can be accessed by parties for use in reputation evaluation, fraud detection, etc. for a particular email address or individual. An outside party can send (e.g., via the Internet) a substantially unique identifier for a user or group of users conducting a transaction for whom a reputation evaluation/fraud analysis is desired. The system can retrieve the vector for the user based on the identifier and provide the vector to the outside party for use in the party's own reputation/fraud model. The vector for the user(s) can be updated, modified, customized, etc. in near real-time as needed to address the independent party's needs. In addition, the system can include an interface through which the outside party can access the vector database directly. In another embodiment, the request for the reputation evaluation can be made within the system, without involving any outside party, and the reputation evaluation/fraud analysis can be conducted and used internally.

The embodiments described above provide advantages in that the system can act as a service for providing a more accurate and detailed reputation analysis for outside entities. The system has access to a contact information database which can store data for millions of users including contact information, their message sending/receiving histories and interactions with other users, their social networks, etc. In contrast, the entities requesting the evaluation may only have very limited information for the user, outside of the identifier. Thus, the system can provide a more effective reputation evaluation that cannot be performed by the entities themselves. The system allows for a more thorough analysis into the reputations of users and potentially fraudulent transactions, whether or not the user is likely to be a spammer or an advertiser transmitting unsolicited messages, and so forth.

The present specification discloses several aspects and optional features. From one aspect there is disclosed a computer-implemented method for reputation evaluation based on a contact information database, the method comprising: selecting a plurality of factors for evaluating the reputation of each of a plurality of users, each of the factors based on one or more records about users stored in a contact information database or the absence of such records; building a reputation model for determining which of the plurality of factors are predictive in evaluating the reputation of each of the plurality of users; generating a vector for each of the plurality of users based on the results of the reputation model; storing the vector for each of the plurality of users; receiving a substantially unique identifier for identifying a first user conducting a transaction; retrieving, based on the substantially unique identifier, the stored vector for the first user, wherein at least one of the factors included in the vector is independent of the transaction being conducted by the first user; and providing the vector for the first user to a reputation engine for evaluating the reputation of the first user.

In one embodiment the retrieving, based on the substantially unique identifier, a stored vector for the first user optionally further comprises: selecting additional factors for evaluating the reputation of the first user; and updating the vector to include the additional factors added to the record for the first user.

In one embodiment the contact information database includes at least a million records that can be used in generating vectors.

In one embodiment the receiving a substantially unique identifier further comprises receiving a reputation evaluation request including the substantially unique identifier from an independent entity requesting evaluation of the reputation of the first user, the request including information regarding specific factors of interest to the independent entity, the specific factors being used to customize the vector for the first user.

In one embodiment providing the vector for the first user to the reputation engine further comprises sending the vector or a portion of the vector to an independent entity having the reputation engine, the reputation engine applying the vector or portion of the vector received to evaluate the reputation of the first user.

In one embodiment the retrieving further comprises: determining that no vector has been generated for the first user; selecting the plurality of factors for evaluating the reputation of the first user; and generating the vector for the first user based on the reputation model.

In one embodiment the retrieving further comprises: determining that no vector has been generated for the first user; selecting the plurality of factors for evaluating the reputation of the first user; and using the absence of a vector or absence of the substantially unique identifier in the contact information database as a predictive factor regarding the user's reputation.

In one embodiment the vector generated in the method is a real-time generated vector that is generated in real-time upon the receiving of the substantially unique identifier, the real-time generated vector being then stored and provided to the reputation engine.

In one embodiment one or more of the plurality of factors used in generating the vector for the first user is based on records stored in the contact information database for other users and wherein the transaction is the first transaction conducted by the first user of that transaction type, the vector for the first user not including any data on prior history of the first user conducting prior transactions.

In one embodiment the plurality of factors for the first user are selected from a group consisting of: whether the substantially unique identifier for the first user appears in records for other users, the number of records for other users in which the substantially unique identifier appears, the type of contact information database in which the substantially unique identifier appears, the composition of a social network of which the first user is a member, whether emails have been sent to the first user, whether emails sent to the first user have been received by the first user, and whether the first user has replied to any emails sent to the first user.

In one embodiment the building a reputation model further comprises: applying binary logistic regression to build a statistical model in which the plurality of factors represent independent variables and wherein the model includes a dependent variable of fraud or not fraud; and assigning each of the plurality of factors a score representing the relevance of the factor to the reputation of each of the users.

In one embodiment the building a reputation model further comprises calculating a reputation score for each user in the contact information database or social graph based on the records in the contact information database or the social graph that reference the user, where those references are themselves weighted by the reputation of a user from which these records came, and wherein this weighting continues recursively throughout the social graph.

One embodiment further comprises providing an interface through which an independent entity directly accesses the stored vectors.

Another aspect of the invention disclosed relates to a computer system for reputation evaluation based on a contact information database, the system comprising a computer configured to execute a method computer modules comprising: a factor manager for selecting a plurality of factors for evaluating the reputation of each of a plurality of users, each of the factors based on one or more records about users stored in a contact information database or the absence of such records; a model generator for building a reputation model for determining which of the plurality of factors are predictive in evaluating the reputation of each of the plurality of users; a vector generator for generating a vector for each of the plurality of users based on the results of the reputation model; a vector database for storing the vector for each of the plurality of users; a transmission module for receiving a substantially unique identifier for identifying a first user conducting a transaction; a retrieval module for retrieving, based on the substantially unique identifier, the stored vector for the first user, wherein at least one of the factors included in the vector is independent of the transaction being conducted by the first user; and the transmission module for providing the vector for the first user to a reputation engine for evaluating the reputation of the first user.

In one embodiment the reputation engine is a fraud engine for evaluating the likelihood that the first user is attempting a fraudulent transaction.

In one embodiment the system further comprises an update engine updating the vector to reflect additional information added to the record.

In one embodiment the retrieval module is further configured for communicating with: the factor manager for selecting additional factors for evaluating the reputation of the first user; and the vector generator updating the vector to include the additional factors added to the record for the first user.

In one embodiment the system further comprises a historical data manager for storing information about message sending/receiving history of the user that is used in generating the vectors.

In one embodiment the vector generated by the vector generator is a real-time generated vector that is generated in real time upon the receiving of the substantially unique identifier by the transmission module, the vector database being further configured to store the real-time generated vector and the transmission module being further configured to provide the real-time generated vector to the reputation engine.

In one embodiment the transmission module is further configured for receiving a reputation evaluation request including the substantially unique identifier from an independent entity requesting evaluation of the reputation of the first user and wherein the reputation evaluation request for the first user includes information regarding specific factors of interest to the independent entity, the specific factors being used to customize the vector for the first user.

In one embodiment one or more of the plurality of factors used in generating the vector for the first user is based on records stored in the contact information database for other users, and wherein the transaction is the first transaction conducted by the first user of that transaction type, the vector for the first user not including any data on prior history of the first user conducting prior transactions.

In one embodiment the plurality of factors for the first user are selected from a group consisting of: whether the record for the first user includes contact information besides an email address, whether the record for the first user is a new record, the composition of a social network of which the first user is a member, whether emails have been send received by the first user recently.

In one embodiment the system further comprises an interface through which an independent entity accesses a vector database in which the vectors are stored to obtain information about the first user.

From a further aspect of the invention, the present specification also discloses a computer program product for reputation evaluation based on a contact information database, the computer program product comprising a computer-readable medium storing computer program code for performing the method comprising: selecting a plurality of factors for evaluating the reputation of each of a plurality of users, each of the factors based on one or more records about users stored in a contact information database or the absence of such records; building a reputation model for determining which of the plurality of factors are predictive in evaluating the reputation of each of the plurality of users; generating a vector for each of the plurality of users based on the results of the reputation model; storing the vector for each of the plurality of users; receiving a substantially unique identifier for identifying a first user conducting a transaction; retrieving, based on the substantially unique identifier, the stored vector for the first user, wherein at least one of the factors included in the vector is independent of the transaction being conducted by the first user; and providing the vector for the first user to a reputation engine for evaluating the reputation of the first user.

In one embodiment the reputation engine is a spam engine for evaluating the likelihood that the first user is attempting to send spam messages.

In one embodiment the retrieving, based on the substantially unique identifier, a stored vector for the first user further comprises: selecting additional factors for evaluating the reputation of the first user; and updating the vector to include the additional factors added to the record for the first user.

In one embodiment the contact information database includes at least a million records that can be used in generating vectors, the records being updated regularly as changes are made by users.

In one embodiment receiving a substantially unique identifier further comprises: receiving a reputation evaluation request including the substantially unique identifier from an independent entity requesting evaluation of the reputation of the first user. modifying the vector in near real time to customize the vector to the needs of the independent entity.

In one embodiment the plurality of factors for the first user are selected from a group consisting of: whether a shipping address of a product requested by the first user is geographically near the first user's physical address, whether and how the first users is linked in a social network to other users, and the message sending and receiving history of the first user.

In one embodiment building a reputation model further comprises calculating a reputation score for each user in the contact information database or social graph based on the records in the contact information database or the social graph that reference the user, where those references are themselves weighted by the reputation of a user from which these records came, and wherein this weighting continues recursively throughout the social graph.

The features and advantages described in this disclosure and in the following detailed description are not all-inclusive, and particularly, many additional features and advantages will be apparent to one of ordinary skill in the relevant art in view of the drawings, specification, and claims hereof. Moreover, it should be noted that the language used in the specification has been principally selected for readability and instructional purposes, and may not have been selected to delineate or circumscribe the inventive subject matter, resort to the claims being necessary to determine such inventive subject matter.

### BRIEF DESCRIPTION OF THE DRAWINGS

The disclosed embodiments have other advantages and features which will be more readily apparent from the detailed description, the appended claims, and the accompanying figures (or drawings). A brief introduction of the figures is below.
Figure (FIG.) 1 is a high-level block diagram illustrating an example of an embodiment of a computing environment of the reputation evaluation system.
FIG. 2 is a high-level block diagram illustrating one embodiment of a standard computer.
FIG. 3 is a high-level block diagram illustrating one embodiment of functional modules within the reputation evaluation system.
FIG. 4 is a flowchart illustrating one embodiment of steps performed for evaluation reputation, including vector generation.
FIG. 5 is a flowchart illustrating one embodiment of steps performed for evaluation reputation, including vector transmission.

The figures depict embodiments for purposes of illustration only. One skilled in the art will readily recognize from the following description that alternative embodiments of the structures and methods illustrated herein may be employed without departing from the principles described herein.

### DETAILED DESCRIPTION OF THE PREFERREEDM BODIMENTS

The Figures (FIGS.) and the following description relate to preferred embodiments by way of illustration only. It should be noted that from the following discussion, alternative embodiments of the structures and methods disclosed herein will be readily recognized as viable alternatives that may be employed without departing from the principles described herein.

Reference will now be made in detail to several embodiments, examples of which are illustrated in the accompanying figures. It is noted that wherever practicable similar or like reference numbers may be used in the figures and may indicate similar or like functionality. The figures depict embodiments of the disclosed system (or method) for purposes of illustration only. One skilled in the art will readily recognize from the following description that alternative embodiments of the structures and methods illustrated herein may be employed without departing from the principles described herein.

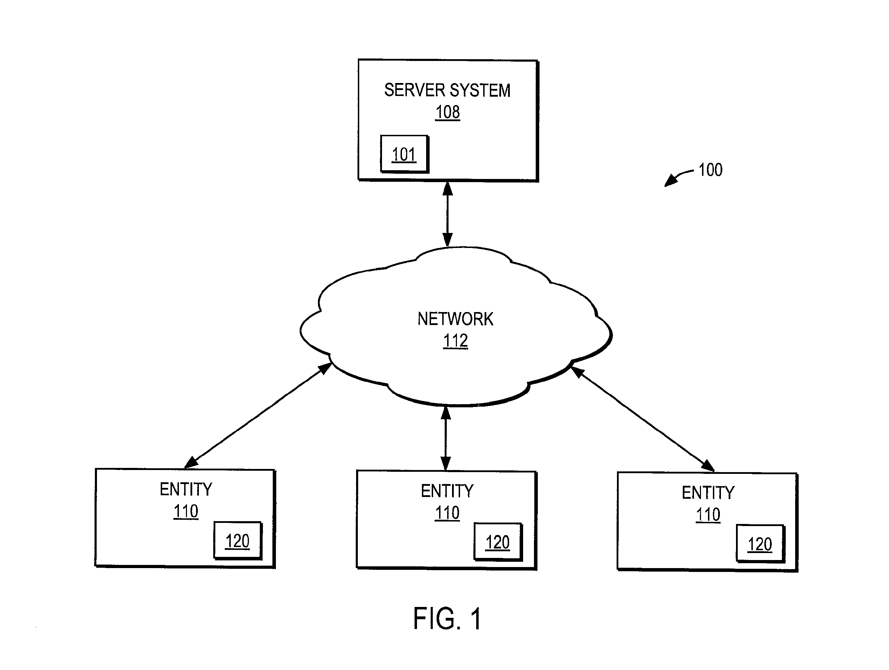

FIG. 1 is a high-level block diagram illustrating one embodiment of a reputation evaluation system 100. The system 100 uses a contact information database that is applied to evaluate the reputation of a user and/or conduct fraud or spam detection. In one embodiment, a reputation evaluator 101 for conducting this evaluation is executed on sewer system 108 of the reputation evaluation system 100. The evaluator 101 conducts the analysis in response to a request from an entity 1 10 for an evaluation of the reputation of one or more users. The entity 110 sends one or more identifiers (e.g., email addresses) via network 112 for each of the users of interest, and information about the reputation of the user can be retrieved by server system 108, modified to accommodate the entity's request, and transmitted to the entity for use in the entity's own reputation or fraud detection engine 120 for an evaluation of the user.

As shown in FIG. 1, multiple entities 110 are in communication with the network 112, such as the Internet, a local area network, wide area network, wireless data network, a wireless protocol based communications network (e.g., network based on WiFi, WiMax, personal communications system (PCS), global system mobile (GSM)), or the like), or other network, etc. In one embodiment, the entities are various different businesses, online services, individuals, etc. associated with or managing transactions conducted by a user. Examples of entities 110 according to this embodiment include EBAY®, PAYPAL®, or other websites for allowing transactions to be conducted, for managing transactions, and so forth. In another embodiment, the entities are various different businesses or online services for performing fraud detection or spam detection in general that might be interested in obtaining additional or more detailed information about users. In another embodiment, the entities are individuals conducting transactions or social network companies or services that might be interested in reputation information about members of their network. Thus, the entities can be any business, individual, service, etc. involved in a transaction with a user who might benefit from an evaluation of the user's reputation or a fraud/spam detection analysis associated with the user. Similarly, users can be individuals, businesses, etc. In addition, although only four entities 110 are shown in FIG. 1, there can be thousands or even millions of entities coupled to the Internet 112. The entities can be computer systems, servers, devices, etc. in communication with the network 112. Similarly, the reputation evaluator 101 and its components can be stored on one or more computer systems, servers, devices, etc.

In one embodiment, the server system 108 is a contact management service including both a private network and set of private network users, and a public network and set of public network users, where the public network communicatively couples the private network with the set of public network users. In this embodiment, the server system 108 can include a central server or group of servers and a database, such as a single data storage device or a set of interconnected storage devices (e.g. storage area network ("SAN), distributed database, or the like), which are connected to, via a network (e.g., of a type similar to network 112), multiple client computers or devices (e.g., personal computer, personal digital assistant ("PDA"), mobile phone, computing tablet, and the like), and manage contact information stored on those computers/devices. For example, each client computer can include a personal information manager (e.g., MICROSOFT OUTLOOK by MICROSOFT CORPORATION) or other type of address book storing contact information for the user of the client computer and for contacts of that user and the central server/database can act as a universal address book for updating and maintaining contact information for the client computers.

As stated above, in one embodiment, the network 112 is the Internet. As known in the art, the Internet is a large, publicly-accessible network of networks. Individual computers and other devices can utilize communications protocols such as the transmission control protocol/internet protocol (TCP/IP) to send messages to other computers on the Internet.
These messages can use protocols such as the hypertext transport protocol (HTTP), file transfer protocol (FTP), simple mail transport protocol (SMTP), post office protocol 3 (POP3), Multipurpose Internet Mail Extension (MIME) protocol, and Internet message access protocol (IMAP), and data representations such as the hypertext markup language (HTML) and extensible markup language (XML) to carry and exchange information. Embodiments of the present invention may use other communications protocols and languages to exchange data.

In the embodiment illustrated in FIG. 1, the reputation evaluator 101 is executed on a server system 108 separate from the reputation engine 120. However, in another embodiment of the reputation evaluation system 100, the reputation evaluator 101 is stored on the same computer system, server, device, etc. as the reputation engine 120. In this embodiment, the reputation evaluation results are not transmitted over a network 112 to independent entities for use with those entities' own reputation engines. Instead, the results are used with a local reputation engine for determining the reputation of or performing a fraud/spam detection for a user.

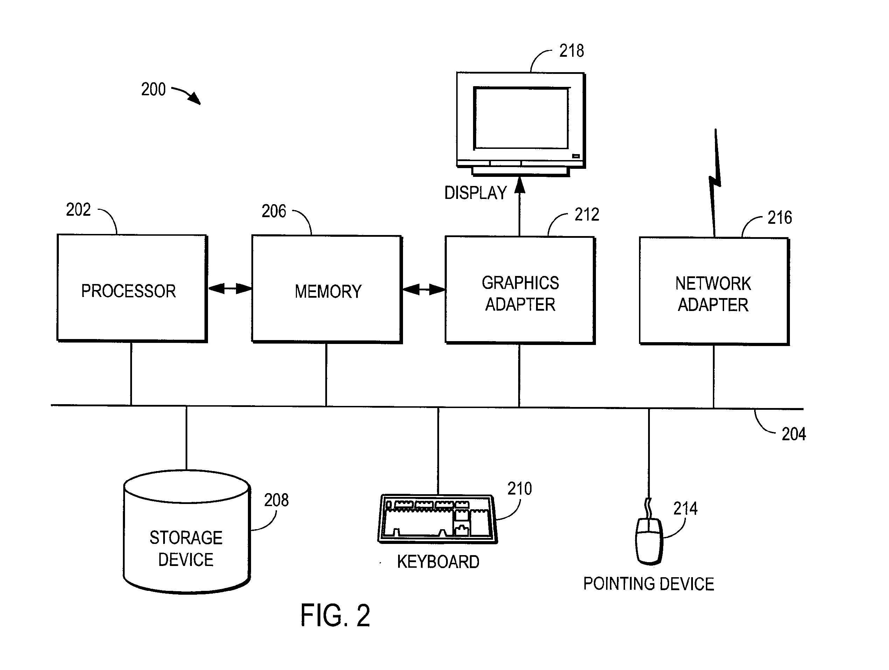

FIG. 2 is a high-level block diagram illustrating one embodiment of a functional view of a typical computer system 200 for storing and executing the reputation evaluation system 100 or its components (including e.g., the reputation evaluator 101, the reputation engine 120, etc.). This computer system 200 can act as an entity 110, as shown in FIG. 1. However, one or more of the components of the computer system 200 may be missing or modified in the entity 110. Illustrated is a processor 202 coupled to a bus 204. Also coupled to the bus 204 are a memory 206, a storage device 208, a keyboard 210, a graphics adapter 212, a pointing device 214, and a network adapter 216.A display 218 is coupled to the graphics adapter 212.

The processor 202 may be any general-purpose processor such as an INTEL x86, SUN MICROSYSTEMS SPARC, or POWERPC compatible-CPU, or the processor 202 may also be a custom-built processor. The memory 206 may be, for example, firmware, read-only memory (ROM), non-volatile random access memory (NVRAM), and/or RAM, and holds instructions and data used by the processor 202. The storage device 208 is, in one embodiment, a hard disk drive but can also be any other device capable of storing data, such as a writeable compact disk (CD) or DVD, and/or a solid-state memory device. The pointing device 214 may be a mouse, track ball, or other type of pointing device, and is used in combination with the keyboard 210 to input data into the computer system 200. The graphics adapter 212 displays images and other information on the display 218. The network adapter 216 couples the computer system 200 with the Internet 112.

As is known in the art, the computer system 200 is adapted to execute computer program modules for providing functionality described herein. In this description, the term "module," "manager," or similar component terms refers to computer program logic for providing the specified functionality. A module can be implemented in hardware, firmware, and/or software. Where any of the modules described herein are implemented as software, the module can be implemented as a standalone program, but can also be implemented in other ways, for example as part of a larger program, as a plurality of separate programs, or as one or more statically or dynamically linked libraries.

It will be understood that the modules described herein represent one embodiment of the present invention. Certain embodiments may include other modules. In addition, the embodiments may lack modules described herein and for distribute the described functionality among the modules in a different manner. Additionally, the functionalities attributed to more than one module can be incorporated into a single module. In one embodiment of the present invention, the modules are stored on the storage device 208, loaded into the memory 206, and executed by the processor 202. Alternatively, hardware or software modules may be stored elsewhere within the computer system 200. Similarly, a computer program product comprising a computer readable medium (e.g., a CD-ROM, a tape, a DVD, memory, flash memory, etc.) containing computer program code for performing functionalities described here is contemplated .

### SYSTEM ARCHITECTURE

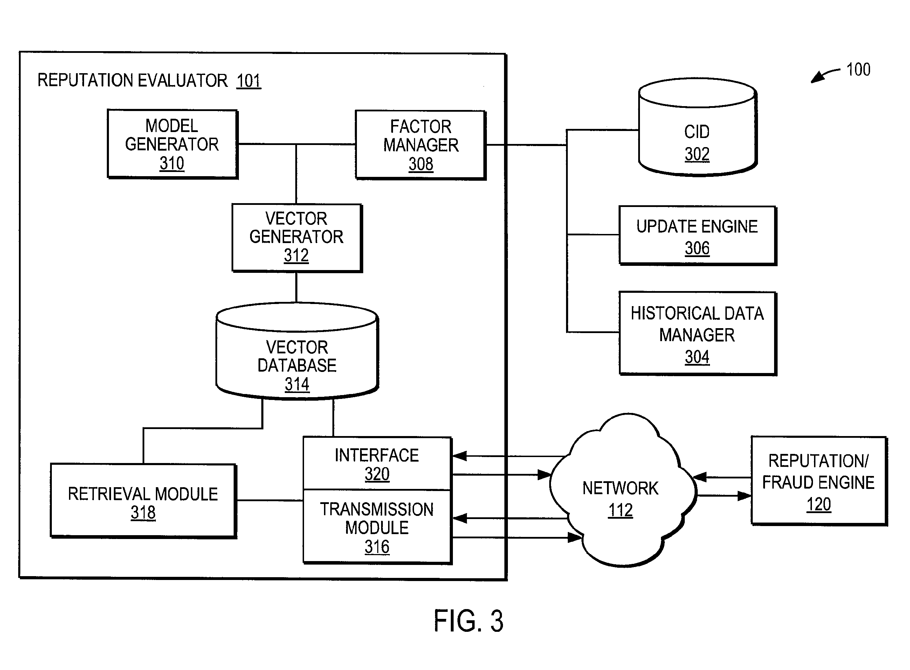

FIG. 3 is a high-level block diagram illustrating one embodiment of functional modules within the reputation evaluator 10 1. The reputation evaluation system 100, in the embodiment illustrated in FIG. 3, includes, a contact information database ("CID") 302, historical data manager 304, an update engine 306, a factor manager 308, a model generator 310, a vector generator 312, a vector database 314, a transmission module 316, a retrieval module 318, and an interface 320. The reputation/fraud engine 120 can be a part of an independent entity 110 or a part of the reputation evaluator 101. Those of skill in the art will recognize that other embodiments can have different and/or additional modules/components than those shown in FIG. 3 and the other figures. Likewise, the functionalities can be distributed among the modules in a manner different than described herein.

The CID 302 stores contact information for a collection of users. The contact information can be stored in one or more records, and each record can contain multiple different types of contact information. The term "contact information" can include any type of information that might be used to contact or otherwise keep track of a user, such as name, phone numbers, fax numbers, mobile phone numbers, electronic mail addresses, physical/local addresses, web addresses, and the like, and can also include more general personal information that might typically be stored in an address book or other personal or social network record. The "record" is the location at which a contact information is stored for the user; there can be multiple records for the user. Each user can also be linked to multiple other users via a network of information in the CID 302, which can be updated and can grow over time. As explained above, the reputation evaluator 101 can be a contact information management service having central server(s) and database(s) (e.g., such as CID 302) for storing contact information, which can also manage contact information stored by users on millions of client computers (e.g., stored locally by a user's own personal information management application, like MICROSOFT OUTLOOK®).

The historical data manager 304 can keep track of historical data associated with the CID 302, which can be stored in the CID 302 or other database associated with the CID 302 or with the manager 304. The historical data manager 304 can track, for example, information about messages (e.g., emails, instant messages, etc.) sent to or by users for whom there is contact information stored in the CID 302 (e.g., whether or not a message sent to a user was received or was returned to the sender, whether or not a user has ever sent a message and how many messages have been sent, whether or not a user has ever received a message and how many messages have been received, and the like). The manager 304 can track changes or updates to records, the number and type of address books in which a user's contact information appears, the structure of the social network for a user (e.g., how many different connections are there to the user, who is connected to the user, how the user's social graph is arranged, etc.). In addition, the manager 304 can track any other type of information that is useful in evaluating the reputation of a user. In one embodiment, the manager 304 tracks this information over time for multiple users or for all users having records in the CID 302. In another embodiment, the manager 304 can calculate this type of information on-the-fly, when needed.

The update engine 306 updates records in the CID 302 as new information is received or as old information is modified by users. For example, new users may be added to the CID 302 and so new records are created for those user. As another example, previous users may change a telephone number, email address, etc. or add a new fax number, and so forth. In addition, the update engine 306 can work with the historical data manager 304 to ensure that updates also occur as the data tracked by the manager 304 changes. For example, a user may be added to the address books of other users, and so his social network may change over time, or a user's message sending/receiving history may change, and so forth.

The factor manager 308 selects a plurality of factors for evaluating the reputation of each of a plurality of users. Each of the factors is based on a record stored for each of the users in the contact information database 302. There can be one or more contact information databases, and each can store data for a multitude users; data for a given user may be stored in multiple contact information databases. The factors used can be any type of factor useful in providing information about the reputation of a user. For example, one factor can be whether a record for a user includes contact information besides an email address, which can indicate a positive reputation or that the user is more likely a real user as opposed to just an email address used for sending spam. Another factor might be whether a record for a user is a new record, indicating that little data is probably available for that user so the user's reputation is less known or tested. The manager 308 can consider whether the user's contact information appears in records for other users, the number of other records in which it appears, the type of contact information database in which the information appears (e.g., information in a MICROSOFT OUTLOOK record may be more reliable than information in a HOTMAIL® address book).

Similarly, the composition of the social network of which the user is a member can provide information about the user, since a user having larger network connected to many users may be more likely to be trustworthy or a user connected to other users who are likely to be trustworthy may be more likely to be trustworthy. Additional factors include the length of time since the user first appeared in an address book, whether messages have been sent to a user, whether messages sent to the user have been received by the user, whether the user has replied to any messages sent, the length of time since the user last sent/received a message, whether the email address for a user matches that user's name in another user's address book, and so forth. As still other examples, where a user is conducting a transaction in which the user has requested a product to be shipped to an address, whether the shipping address is found in that user's address book or is geographically close to that user's address. As described above, various types of historical data can be tracked by manager 304 which can be used as factors by the factor manager 308. The factors listed above are just some examples of factors that can be considered in the reputation evaluation. The system 100 is in no way limited to these examples, as one of ordinary skill in the art would recognize that many other factors could similarly be used in the evaluation.

The examples of factors provided above include information that can most effectively be acquired from large contact information databases or contact management services. In some case, these types of data can only be acquired through contact management services that have access to and can collect and update such information. These factors provide much more substantial data about a user than is typically available for most transactions. In many transactions, for example, there may be no data available about a user at all. If the user has not conducted any transactions in the past, then little data may be gleaned about that user and his likelihood of committing fraud. In fact, the only data available for many transactions may simply be the user's email address, which provides very minimal data about the user's reputation. In contrast, the reputation evaluation system 100 can take data collected from millions of users to significantly improve the accuracy in evaluating reputations and the likelihood of a fraudulent transaction, even where the user(s) have not previously conducted transactions. Even if little data is provided in a user's own record stored in the CID 302, the system 100 can obtain much additional information about that user based on his links to and contact with other users having records stored in the CID 302.

The factor manager 308 can select any number of factors to be considered in the reputation evaluation. Further, different factors can be considered in different evaluations and for different users, so that the evaluation for any given user or group of users, or for a given situation or transaction, can be customized to acquire the most accurate analysis. In addition, factors used may be changed over time and new factors can be added, as well.

The model generator 3 10 builds a reputation model for determining which of the factors are predictive in evaluating the reputation of each of the of users. In this manner, the system 100 can determine which of the factors selected by manager 308 are useful in the reputation/fraud evaluation and should be included in the vector generated. Different types of predictive modeling techniques, such as binary logistic regression, classification and regression trees, neural networks, discriminant analysis, kernel density estimation and classification, generalized additive models, multivariate adaptive regression splines, hierarchical mixture of experts, boosting, forward stagewise additive modeling, multivariate adaptive regression trees, nearest neighbor methods, market basket analysis, cluster analysis, self-organizing maps, projection pursuit, multidimensional scaling, subset selection, eigenvector analysis, singular value decomposition, etc., can be used to create a statistical model. Various different statistical packages currently available can be used in building the reputation model, for example, SPSSB, MATLAB by THE MATHWORKS, INC, SAS, R PROJECT, S-PLUS by INSIGHTFUL®, SUDAAN by RTI INTERNATIONAL, and so forth. In addition, there are a number of derivative methods (e.g., the probit function) that could also be used.

In one embodiment, binary logistic regression is used to build a statistical model in which the factors represent independent variables and the model includes a dependent variable (e.g., fraud or not fraud), as well. Logistic regression techniques are used to determine which of those independent variables are statistically relevant in figuring out if the dependent variable is fraud or not fraud. In some embodiments, the system tests various data sets, using some to generate the model and others to validate the model by making predictions as to the reputation of a user or whether an user/transaction is fraudulent.

In another embodiment, the model generator 310 builds a reputation model for one user using information relating to another user. In this embodiment, the generator 3 10 can calculate a reputation score for a first user and then can determine that a second user is in the contact information database or social graph of the first user. For example, the first user might have stored in a record in an address book the contact information or other details about the second user. As another example, while the second user's information may not be stored in an address book for the first user, the first user might be connected to the second user via a social graph. If the first user has information for user A stored in an address book, and user A has information for the second user stored in his address book, then the first and second users are linked via user A in this social graph. If the first user has the second user's information stored or is otherwise linked to the second user, than the model generator 310 can use the reputation score of the first user as a factor in calculating a reputation score for the second user or can otherwise consider the information associated with the first user's reputation in determining the second user's reputation.

In another embodiment, the model generator 310 builds a reputation for each user based on an analysis of the entire social graph. In this embodiment, the generator 310 can calculate a reputation value for each user based on the records in the contact information database or social graph that refer to the user but where those "inbound references" are themselves weighted by the reputation value of the user from which these records came, and so on recursively throughout the social graph. In this manner, the system can be used to detect possible collusion among parties who wish to send spam, perform fraud, etc., and wish to go undetected by the system by creating address book entries for themselves and getting their co-conspirators to also create address book entries for each other. This collusion might allow these parties to appear to be "real users" since they seem to be connected to various other parties (to one another), which would normally indicate a likelihood of being trustworthy. The naive count of the number of address books that include these parties will be high, so just being "connected to many users" may not be as strong a predictor because it can be easily gamed. The social graph for these parties is actually a disconnected island separate from the rest of the strongly-connected social graph of "real users." However, the weighting system described above manages this by ensuring that the reputation value of these disconnected islands of users will be low. This type of network-wide connectedness analysis is more robust because it takes into consideration whether or not the users are tied to the strongly-connected core of the social graph that is known to be trustworthy.

The vector generator 312 generates a vector for each of the plurality of users based on the results of the reputation model. The factors can also be scored, and the overall score for a user can provide information about that user's reputation (e.g., higher scoring users can be considered to have better reputations than lower scoring users, or vice versa). The factors found to be statistically relevant are included in the vector, and the factors found not to be statistically relevant can be left out or scored lower.

In one embodiment, the vector generator 312 works with the factor manager 308 and model generator 310 to generate a vector for many or all of the users having records in the CID 302. These vectors can be generated in advance of any request for analysis of the reputation of a user, so that the vector for that user will be available for user when needed. However, vectors can also be generated in real time, when a request for reputation analysis is made. In addition, a user can have multiple different vectors applying different factors. For example, the user could have a vector for evaluating his reputation as a buyer, and a separate vector for his reputation as a seller, since different factors may be useful in determining reputation in these different situations. However, these different vector types, such as buyer/seller vectors, can also be combined into one large vector for the user. If the transaction is the first transaction conducted by the user of that transaction type, the vector for the user may not include any data on prior history of the user conducting prior transactions.

In addition, the vector can also be updated over time to reflect additional information added to a record for a user, or other changes made in the CID 302 by the update engine 306. For example, as a user is linked into more address books for other users, that first user's reputation may improve. Similarly, if the user adds more contact information to his record, beyond just an email address, that might also improve his reputation.

The vector database 314 stores the vector for each of the users. As stated above, there can be thousands or millions of users, and so thousands or millions of vectors stored in the vector database 314. Additionally, there can be many vectors for each user stored in the vector database 314. As stated above, in some embodiments, the vector is created in real time upon request for a reputation analysis. In this case, the vector will not be stored before the request for an analysis is received, but will only be stored after such a request.

The transmission module 316 receives a substantially unique identifier for identifying a first user conducting a transaction. In some embodiments, multiple identifiers are received for each user. Once the factor manager 308, model generator 310, and vector generator 312 have been used to generate the collection of vectors stored in the vector database 314, the database 314 can then be used in evaluating the reputation of users. Each user to be evaluated can be identified by a substantially unique identifier. The substantially unique identifier can be any type of identifier for the user, such as an email address for the first user, a name for the user, a mobile phone number for that user, or other unique or mostly unique information for that user. In addition multiple substantially unique identifiers can be combined to create a more unique identifier.

In one embodiment, the identifier is received from an independent entity, such as one or more of entities 110 having a reputation/fraud engine 120. In this embodiment, the entity 110 desiring to have a reputation/fraud analysis conducted for a user or group of users can send identifier(s) for those users across network 112 to the transmission module 316 for analysis. In this embodiment, the reputation evaluator 101 acts as a service for providing a more accurate and detailed reputation analysis for outside entities 110 since the reputation evaluator 101 has access to the CID 302 which can store data for millions of users. The evaluator 101 can provide its evaluation results to the requesting entities 110 over network 112, and the entities 110 can use this information directly, or can provide this information to their own reputation evaluation engines 120 for use in creating their own reputation/fraud models for the user(s). In some embodiments, the reputation evaluation request sent by entity 110 is fraud detection request for evaluating the user for likelihood of committing a fraudulent transaction. In other embodiments, the request is another type of evaluation of a user, such as an evaluation of whether or not the user is likely to be a spammer or an advertiser transmitting unsolicited messages, whether or not the user resides in a particular geography, etc..

In another embodiment, the reputation/fraud engine 120 is a component of server system 108, and the reputation evaluation is performed by server system 108. In this embodiment, the transmission module **3** 16 receives the identifier(s) from another module of server system 108 requesting a reputation evaluation of a user or group of users. The reputation evaluation occurs in the same manner as would occur if requested by an outside entity 110, except that the results of the evaluation are provided to the requesting module on the server system 108 rather than being sent over network 112 to an independent entity 110.

The retrieval module 318 retrieves, based on the substantially unique identifier, the stored vector for the first user. The module 318 can retrieve a vector stored in the vector database 316. Further, the module 318 can also generate a new vector as well as modify or update one of the vectors in the database 316. In one embodiment, the module 318 can work with other components of the system 100 to select additional factors for evaluating the reputation of the user, can build an updated reputation model for the user, and can update/modify the vector to include the additional factors added to the record for the user. Thus, the vectors stored in the database 316 can be updated on the- fly or near real time, while performing a reputation evaluation. In addition, certain factors might always be calculated in substantially real time. For example, if the user is conducting a transaction in which a product is being purchased and will be shipped to that user, the system 100 can include a factor regarding whether or not the user's address in the address book record(s) for that user is near to the shipping address. This calculation can be done on request and included in the vector for that user. Similarly, if no vector yet exists for a particular user for which an identifier was received, the system 100 can either indicate to the requestor that no vector exists or can generate a vector for that user by selecting factors for the user, building the reputation model if needed, and then generating the vector based on this information. Further, the absence of information about a user in the CID 302 is in itself information about the user and can be used to generate a vector.

In one embodiment, the entity requesting the reputation evaluation can include specific factors of interest to that entity for that user, and the specific factors can be used to generate a vector for that user or to modify or update an existing vector. In this manner, the vectors can be customized according to the requestor's needs. Similarly, the fact that no vector yet exists can be used as a predictive factor regarding the user's reputation.

Thus, for all transactions or events for which reputation/fraud information would be useful, the entity managing the transaction can, at transaction time, send the identifier or batch of identifiers to the reputation evaluator 101. The evaluator will send back the results quickly or in near real time for the entity 110 to use regarding that transaction.

In addition, at least one of the factors included in the vector can be independent of the transaction being conducted by the first user. Thus, the reputation evaluation includes one or more factors separate from the transaction itself, such as factors about the particular user (e.g., any of the factors described above).

The transmission module 316 provides the vector or a portion of the vector for the first user to the reputation engine 120 for evaluating the reputation of the first user. Where the engine 120 is managed by an independent entity 110, the vector can be transmitted over the network 112 and used with that entity's engine 120 to complete the evaluation. Where the engine 120 is managed by or is a part of the reputation evaluator 101, the vector is retrieved by module 314 and provided to the engine 120 to complete the evaluation. In some embodiments, no reputation engine is used, but instead the vector itself provides the necessary reputation evaluation information.

The interface 320 (e.g., application programming interface ("**API**") or other interface) allows independent entities 110 to access information relating to the reputation evaluation. For example, the entities 110 can be given access to the stored vectors in the vector database. In this manner, the entities 110 can access the database 314 to obtain more data about users and their reputations. The entity 110 might access an additional vector that was not transmitted previously or a portion of a vector. In one embodiment, the transmission module 316 transmits the vector by simply providing the interface 320 through which the entity 110 can access the reputation evaluation information itself. In this embodiment, the module 316 does not actually send anything to the entities 110, but the entities 110 instead access the information themselves. In one embodiment, interface 320 is a web interface allowing the entities 110 to access the vector database 314 through the Internet.

### REPUTATION EVALUATION METHODS

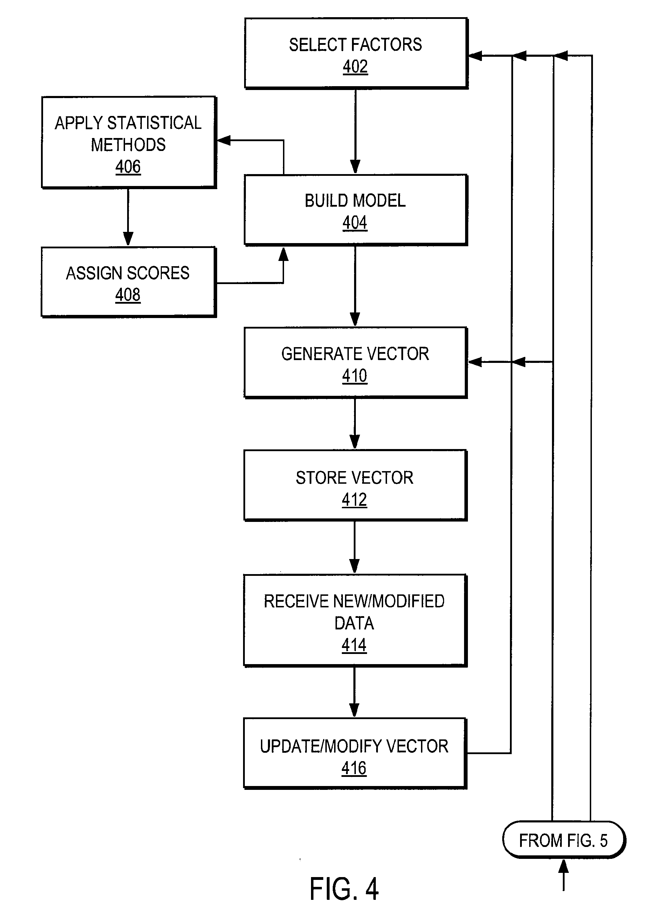

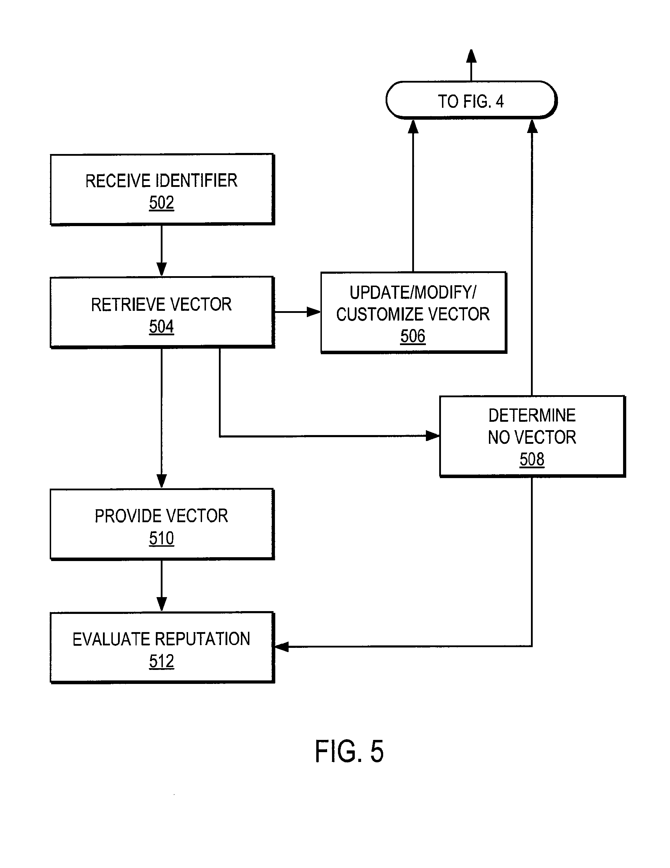

Referring now to FIG. 4, there is shown a flowchart illustrating embodiments for operation of reputation evaluation system 100. Specifically, FIG. 4 illustrates the steps of reputation evaluation system 100 involving generation of the vectors for the users. It should be understood that these steps are illustrative only. Different embodiments of reputation evaluation system 100 may perform the illustrated steps in different orders, omit certain steps, andor perform additional steps not shown in FIG. 4 (the same is true for FIG. 5).

As shown in FIG. 4, reputation evaluation system 100 selects 402 factors for evaluating the reputation of each of the users. The factors are based on information included in records stored in the CID 302. The factors selected for a first user can be based on the record storing that user's information, and/or records of other users that can provide data about that first user. In one embodiment, the factors are selected for most or all users about whom there is data stored in the CID 302. The factors can be pre-selected before any reputation evaluation is requested, or they can be calculated at the time of the request for evaluation of the user.

The system 100 builds 404 a reputation model for determining which of the initially selected 402 factors are predictive in evaluating the reputation of each of the users. In this manner, the system 100 can determine what factors should be used in the model. In building 404 this model, the system 100 can apply 406 statistical methods, such as binary logistic regression or other methods, and assign 408 scores to each of the factors. The system 100 thus generates 410 a vector defined as multiple scores corresponding to each of the factors in the model. The system 100 stores 412 the vector for each of the users.

As the system 100 receives 414 new or modified data, the vectors can be updated/modified 416 over time. In addition, new data may be received 414 for a user who previously did not have a record in the CID 302, and so that user's information can then be used to generate a vector for that user. Further, even is a user (unique identifier) is not in the CID 302, the system can still compute a vector for that unique identifier.

Referring now to FIG. 5, there is shown a flowchart illustrating the operation of reputation evaluation system 100, according to some embodiments of the present invention. Specifically, FIG. 5 illustrates the steps of the reputation evaluation system 100 involving transmission of the vectors for the users.

As shown in FIG. 5, reputation evaluation system 100 conducts an evaluation upon receiving 502 a substantially unique identifier or a batch of identifiers for users conducting a transaction or involved in some other event about which a reputation evaluation is desired. As explained above, the identifier(s) can be received 502 from an independent entity 110 or can be received by another component within or associated directly with the reputation evaluator 101.

The system 100 retrieves, based on the identifier, the stored vector for the user and provides 510 the vector to the requestor. In one embodiment, the vector is retrieved 504 directly from the vector database 314 and is provided to a reputation engine 120 for evaluation the reputation of the user. In another embodiment, the vector is first updated/modified 506 to reflect new or revised information for the user that might not yet have been considered when creating the vector. In addition, the vector can be customized 506 according to the requestor's needs. Different factors can be considered, only a portion of the vector used, a new vector generated to address a particular situation or transaction (e.g., a buyer side versus a seller side vector), and so forth. In some embodiments, the system 100 may have previously worked with the requestor, and may have a standard set or sets of factors to be used with vectors for that requestor. In some cases, the updates, modifications, or customizations 506 may require only a small change to the vector. In other cases, the system 100 may need to go through the factor selection 402 and model building 404 processes too.

In some embodiments, the vector or a portion of the vector is created in real time, upon receiving 502 an identifier. In these embodiments, the method steps may occur in a different order, with the receiving 503 of the identifier occurring before the generation 410 and storing 412 of the vector, or in some cases occurring even before the factor selection 402 and model building 404 steps.

In addition, the system can determine 508 that there is no vector yet for the user. In some embodiments, if there is no vector for a user or information in the CID 302 for a user, this can provide information about the user's reputation or fraud risk. Thus, the absence of a vector for a user or absence of data in CID 302 for a user can be used as a predictive factor regarding an evaluation 512 of the user's reputation. In other embodiments in which there is no vector yet for the user, if there is information for that user in the CID 302 or if information can otherwise be acquired, the system 100 can generate 410 a vector for that user. In some embodiments, the system 100 will select 402 factors for the user, build 404 the model for that user, and generate 41 0 the vector. Similarly, in embodiments in which some or all vectors are created in real time upon a reputation analysis request, before creating the vector in real time, the system 100 could first determine 508 if a vector exists already for the user in the database by attempting to retrieve 504 a vector for that user (so steps 504, 508 might occur before the generation step 410 and possibly before steps 402 and 404). If there is no vector, the system 100 can then generate a vector in real time.

In any of the embodiments above, the vector can be provided 510 via a network to an independent entity 110 or to a reputation engine or other component within or associated with the reputation evaluator 10 1. Once the vector has been provided 5 10, the reputation evaluator 101 can evaluate 512 the user for fraud or the user's reputation or the evaluation 512 can be done by an entity 110.

The methods disclosed above provide a more accurate and detailed reputation analysis that incorporates usage of a contact information database that stores data for millions of users including contact information, their message sending/receiving histories and interactions with other users, their social networks, etc. Most entities involved in a transaction with a user only have very limited information for the user, outside of the basic transaction information itself. The methods here employ a much more substantial base of knowledge about a user to which most entities do not have access, including a great deal of information about the user himself that is independent of the transaction being conducted. Thus, the methods provide a more effective and thorough analysis into the reputations of users, into potentially fraudulent transactions, into whether or not the user is likely to be a spammer, and so forth.

Some portions of above description describe the embodiments in terns of algorithms and symbolic representations of operations on information. These algorithmic descriptions and representations are commonly used by those skilled in the data processing arts to convey the substance of their work effectively to others skilled in the art. These operations, while described functionally, computationally, or logically, are understood to be implemented by computer programs or equivalent electrical circuits, microcode, or the like. Furthermore, it has also proven convenient at times, to refer to these arrangements of operations as modules, without loss of generality. The described operations and their associated modules may be embodied in software, firmware, hardware, or any combinations thereof.

As used herein any reference to "one embodiment" or "an embodiment" means that a particular element, feature, structure, or characteristic described in connection with the embodiment is included in at least one embodiment. The appearances of the phrase "in one embodiment" in various places in the specification are not necessarily all referring to the same embodiment.

As used herein, the terms "comprises," "comprising," "includes," "including," "has," "having" or any other variation thereof, are intended to cover a non-exclusive inclusion. For example, a process, method, article, or apparatus that comprises a list of elements is not necessarily limited to only those elements but may include other elements not expressly listed or inherent to such process, method, article, or apparatus. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In addition, use of the "a" or "an" are employed to describe elements and components of the embodiments herein. This is done merely for convenience and to give a general sense of the invention. This description should be read to include one or at least one and the singular also includes the plural unless it is obvious that it is meant otherwise.

Unless specifically stated otherwise, it may be appreciated that terms such as **cc** processing," "computing," "calculating," "determining," or the like, refer to the action and/or processes of a computer or computing system, or similar electronic computing device, that manipulates and/or transforms data represented as physical quantities (e.g., electronic) within the computing system's registers and/or memories into other data similarly represented as physical quantities within the computing system's memories, registers or other such information storage, transmission or display devices. The embodiments are not limited in this context.

Upon reading this disclosure, those of skill in the art will appreciate still additional alternative structural and functional designs for a system and a process for reputation evaluation and fraud detection through the disclosed principles herein. Thus, while particular embodiments and applications have been illustrated and described, it is to be understood that the disclosed embodiments are not limited to the precise construction and components disclosed herein. Various modifications, changes and variations, which will be apparent to those skilled in the art, may be made in the arrangement, operation and details of the method and apparatus disclosed herein without departing from the spirit and scope defined in the appended claims. Likewise, the particular naming and division of the modules, managers, features, attributes, methodologies and other aspects are not mandatory or significant, and the mechanisms that implement the invention or its features may have different names, divisions and/or formats. Furthermore, as will be apparent to one of ordinary skill in the relevant art, the modules, managers, features, attributes, methodologies and other aspects of the invention can be implemented as software, hardware, firmware or any combination of the three. Of course, wherever a component of the present invention is implemented as software, the component can be implemented as a script, as a standalone program, as part of a larger program, as a plurality of separate scripts and/or programs, as a statically or dynamically linked library, as a kernel loadable module, as a device driver, and/or in every and any other way known now or in the future to those of skill in the art of computer programming. Additionally, the present invention is in no way limited to implementation in any specific programming language, or for any specific operating system or environment.

## Claims

1. A computer-implemented method for reputation evaluation based on a contact information database, the method comprising:
selecting a plurality of factors for evaluating the reputation of each of a plurality of users, each of the factors based on one or more records about users stored in a contact information database or the absence of such records;
building a reputation model for determining which of the plurality of factors are predictive in evaluating the reputation of each of the plurality of users;
generating a vector for each of the plurality of users based on the results of the reputation model;
storing the vector for each of the plurality of users;
receiving a substantially unique identifier for identifying a first user conducting a transaction;
retrieving, based on the substantially unique identifier, the stored vector for the first user, wherein at least one of the factors included in the vector is independent of the transaction being conducted by the first user; and
providing the vector for the first user to a reputation engine for evaluating the reputation of the first user.

2. The method of claim 1, wherein retrieving, based on the substantially unique identifier, a stored vector for the first user further comprises: selecting additional factors for evaluating the reputation of the first user; and updating the vector to include the additional factors added to the record for the first user.

3. The method of claims 1 or 2, wherein receiving a substantially unique identifier further comprises receiving a reputation evaluation request including the substantially unique identifier from an independent entity requesting evaluation of the reputation of the first user, the request including information regarding specific factors of interest to the independent entity, the specific factors being used to customize the vector for the first user.

4. The method of any claims 1 to 3, wherein providing the vector for the first user to the reputation engine further comprises sending the vector or a portion of the vector to an independent entity having the reputation engine, the reputation engine applying the vector or portion of the vector received to evaluate the reputation of the first user.

5. The method of any of claims 1 to 4, wherein retrieving further comprises:
determining that no vector has been generated for the first user;
selecting the plurality of factors for evaluating the reputation of the first user; and
generating the vector for the first user based on the reputation model.

6. The method of any of claims 1 to 5, wherein retrieving further comprises: determining that no vector has been generated for the first user; selecting the plurality of factors for evaluating the reputation of the first user; and using the absence of a vector or absence of the substantially unique identifier in the contact information database as a predictive factor regarding the user's reputation.

7. The method of any of claims 1 to 6, wherein one or more of the plurality of factors used in generating the vector for the first user is based on records stored in the contact information database for other users and wherein the transaction is the first transaction conducted by the first user of that transaction type, the vector for the first user not including any data on prior history of the first user conducting prior transactions.

8. The method of any of claims 1 to 7, wherein building a reputation model further comprises:
applying binary logistic regression to build a statistical model in which the plurality of factors represent independent variables and wherein the model includes a dependent variable of fraud or not fraud; and
assigning each of the plurality of factors a score representing the relevance of the factor to the reputation of each of the users.

9. The method of any of claims 1 to 8, wherein building a reputation model further comprises calculating a reputation score for each user in the contact information database or social graph based on the records in the contact information database or the social graph that reference the user, where those references are themselves weighted by the reputation of a user from which these records came, and wherein this weighting continues recursively throughout the social graph

10. A computer system for reputation evaluation based on a contact information database, the system comprising a computer configured to execute a method computer modules comprising:
a factor manager for selecting a plurality of factors for evaluating the reputation of each of a plurality of users, each of the factors based on one or more records about users stored in a contact information database or the absence of such records;
a model generator for building a reputation model for determining which of the plurality of factors are predictive in evaluating the reputation of each of the plurality of users;
a vector generator for generating a vector for each of the plurality of users based on the results of the reputation model;
a vector database for storing the vector for each of the plurality of users;
a transmission module for receiving a substantially unique identifier for identifying a first user conducting a transaction;
a retrieval module for retrieving, based on the substantially unique identifier, the stored vector for the first user, wherein at least one of the factors included in the vector is independent of the transaction being conducted by the first user; and
the transmission module for providing the vector for the first user to a reputation engine for evaluating the reputation of the first user.

11. The system of claim 10, wherein the reputation engine is a fraud engine for evaluating the likelihood that the first user is attempting a fraudulent transaction.

12. The system of any of claims 10 or 11, further comprising an update engine updating the vector to reflect additional information added to the record.

13. The system of any of claims 10 to 12, wherein the retrieval module is further configured for communicating with:
the factor manager for selecting additional factors for evaluating the reputation of the first user; and
the vector generator updating the vector to include the additional factors added to the record for the first user.

14. The system of any of claims 10 to 13, further comprising a historical data manager for storing information about message sending/receiving history of the user that is used in generating the vectors.

15. A computer program product for reputation evaluation based on a contact information database, the computer program product comprising a computer-readable medium storing computer program code for performing the method of any of claims 1 to 9.
